# FASCICULE DE BREVET EUROPEEN

(11) **EP 1 891 851 B1**
(45) Date de publication et mention de la délivrance du brevet: **12.05.2010**
(21) Numéro de dépôt: 07114436.4
(22) Date de dépôt: 16.08.2007
(51) Int. Cl.: A01D 34/73

(54) **Dispositif de fixation rapide et sécurisé d'un couteau de machine de fauchage**
Sichergestellte Schnellbefestigungsvorrichtung eines Messers für Mähmaschine
Quick and safe fastening device of a mowing machine knife

(30) Priorité: 24.08.2006 FR 0653449
(43) Date de publication de la demande: 27.02.2008
(73) Titulaire: KUHN S.A., 67706 Saverne Cedex (FR)
(72) Inventeur: Chalancon, Jean-Marie, 68000, Colmar (FR)
(74) Mandataire: Andres, Jean-Claude

(56) Documents cités:
- EP-A1- 0 809 929
- DE-A1- 2 612 381
- FR-A1- 2 630 289

## Description

L'invention concerne un dispositif de fixation rapide et sécurisé des couteaux portés par un rotor de coupe d'une machine de fauchage, un rotor de coupe avec un tel dispositif de fixation des couteaux et une machine de fauchage avec des rotors de coupe équipés d'un tel dispositif de fixation des couteaux.

Les faucheuses rotatives employées dans le domaine agricole comportent une pluralité de rotors constitués par des disques ou des tambours munis de couteaux qui s'étendent au-delà de leur périphérie. Ces rotors peuvent être entraînés en rotation par des moyens d'entraînement portés par une barre support s'étendant latéralement par rapport à un véhicule porteur durant le travail.

En fonctionnement les organes de coupe disposés sur la barre de coupe sont portés en rotation rapide de manière à ce que les couteaux sectionnent les plants.

Il arrive parfois que ces couteaux montés sur les rotors en rotation rencontrent des pierres, des branches, ou d'autres obstacles, et soient détériorés. Le remplacement desdits couteaux est une opération classique de maintenance sur de telles faucheuses rotatives.

Les couteaux reliés aux rotors sont maintenus en place selon différentes techniques connues, par exemple au moyen de boulons et d'écrous, comme cela est décrit dans le document FR 1 562 887, ou au moyen d'axes et de lames ressort selon la description qui en est réalisée dans le document FR 2 630 289.

A l'usage les deux méthodes de maintien des couteaux sur les disques présentent des avantages et des inconvénients.

La technique de fixation avec des boulons et des écrous est très sûre, cependant il faut dévisser et revisser les écrous des boulons lors de chaque changement des couteaux, ce qui est une opération longue et fastidieuse.

La technique employant des axes et des lames ressorts est beaucoup plus rapide puisqu'il suffit de repousser la lame ressort correspondante vers le bas avec un outil approprié pour enlever un couteau usé et en remettre un neuf. Toutefois ce mode de fixation n'est pas absolument sûr car il se peut qu'une lame ressort, suite à la rencontre avec un obstacle, soit repliée vers le bas et que le couteau correspondant puisse se détacher et être éjecté. Un tel couteau est alors très dangereux pour les personnes pouvant se trouver sur la trajectoire d'éjection.

L'invention a donc pour objectif de résoudre ces principales difficultés rencontrées dans la technique antérieure en proposant un dispositif de maintien des couteaux permettant un remplacement rapide des éléments abîmés tout en garantissant une sécurité élevée, notamment vis à vis des risques d'éjection.

A cet effet, la présente invention consiste à prévoir notamment un moyen d'immobilisation de la lame ressort durant le travail.

L'invention concerne donc un dispositif de fixation rapide et sécurisé d'un couteau porté par le rotor d'une machine de fauchage, lequel couteau est maintenu en place sur ledit rotor au moyen d'un axe d'accrochage et d'une lame ressort qui est liée au rotor par des moyens de liaison, le dispositif de fixation étant caractérisé par le fait qu'il comporte au moins un verrou immobilisant ladite lame ressort indépendamment de ses moyens de liaison au rotor, lequel verrou est placé à proximité de ou est relié à l'axe d'accrochage du couteau sur le rotor.

L'avantage essentiel du dispositif de blocage des couteaux selon l'invention est de permettre le maintien en place de ces couteaux de manière sûre, y compris dans l'éventualité de chocs avec des obstacles, et d'autoriser un remplacement rapide des couteaux soit manuellement, soit à l'aide d'un outil adapté.

Le dispositif de fixation rapide et sécurisé du couteau est positionné sous le plan du rotor, de préférence dans une cuvette, de manière à être protégé par ledit rotor en cas de choc avec un obstacle. Ainsi configuré, le moyen de verrouillage reste effectif dans toutes les situations.

Différentes variantes du dispositif de verrouillage sont envisageables. Il peut notamment être prévu une pièce à bascule manipulable manuellement ou une pièce déplaçable au moyen d'un outil adapté.

Ce dispositif de blocage représente une amélioration significative de la sécurité d'emploi des faucheuses comportant des couteaux portés par des rotors entraînés en rotation rapide et donc des dispositifs connus.

D'autres caractéristiques et avantages de l'invention se dégageront de la description qui va suivre en regard des dessins annexés qui ne sont donnés qu'à titre d'exemples non limitatifs. Dans ces figures :
- la figure 1 représente une vue de l'arrière d'une machine de fauchage attelée à un véhicule tracteur et utilisant un groupe faucheur rotatif selon l'invention.
- la figure 2 montre une vue de dessus d'un rotor équipé d'un premier exemple de réalisation d'un dispositif de fixation rapide et sécurisé selon l'invention.
- la figure 3 illustre une vue de dessous du rotor selon ce premier exemple de réalisation.
- la figure 4 représente une vue de détail en coupe du dispositif de fixation rapide et sécurisé des couteaux selon le premier exemple de réalisation.
- la figure 5 montre une vue de détail en coupe d'un deuxième exemple de réalisation d'un dispositif de fixation rapide et sécurisé selon l'invention.

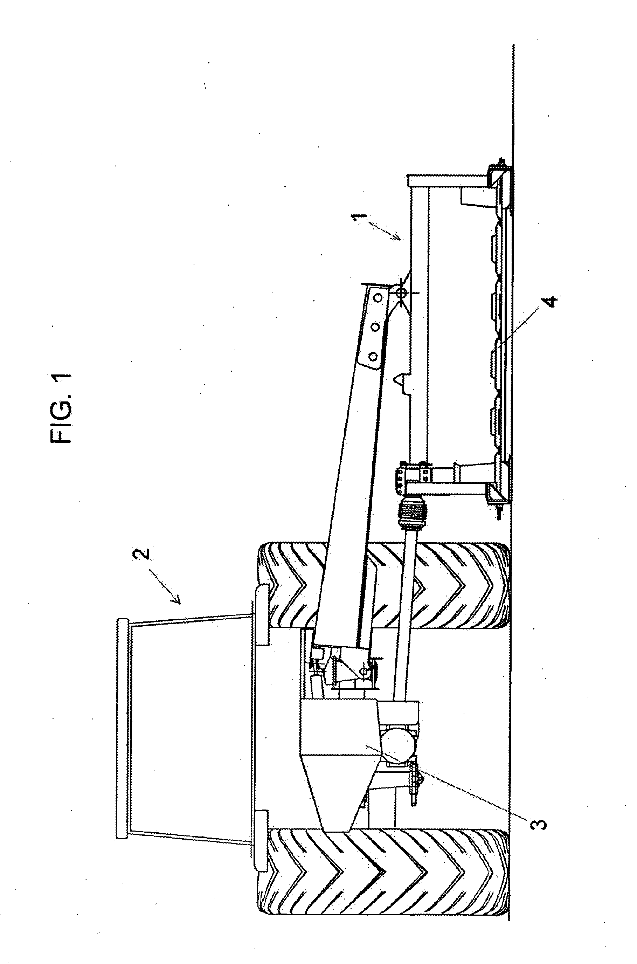

Comme le montre la figure 1, la faucheuse 1 est accrochée à un tracteur 2 de manière à s'étendre transversalement par rapport à la direction de travail et de déplacement du véhicule porteur lors du fonctionnement.

La faucheuse 1 est reliée au tracteur par l'intermédiaire d'un attelage 3. Elle possède une pluralité de rotors 4 positionnés côte à côte sur la barre de coupe. Pendant le travail ces rotors 4 sont animés en rotation de manière à couper l'herbe ou d'autres végétaux dans un plan sensiblement parallèle au sol. Des organes d'entraînement et de transmission de l'énergie nécessaire pour porter en rotation rapide les rotors de coupe 4 sont disposés entre la faucheuse et ledit tracteur.

De manière tout à fait classique, la barre de coupe de la faucheuse peut comporter des organes de protection pour protéger l'outil et les personnes chargées du travail pendant le fonctionnement de la machine.

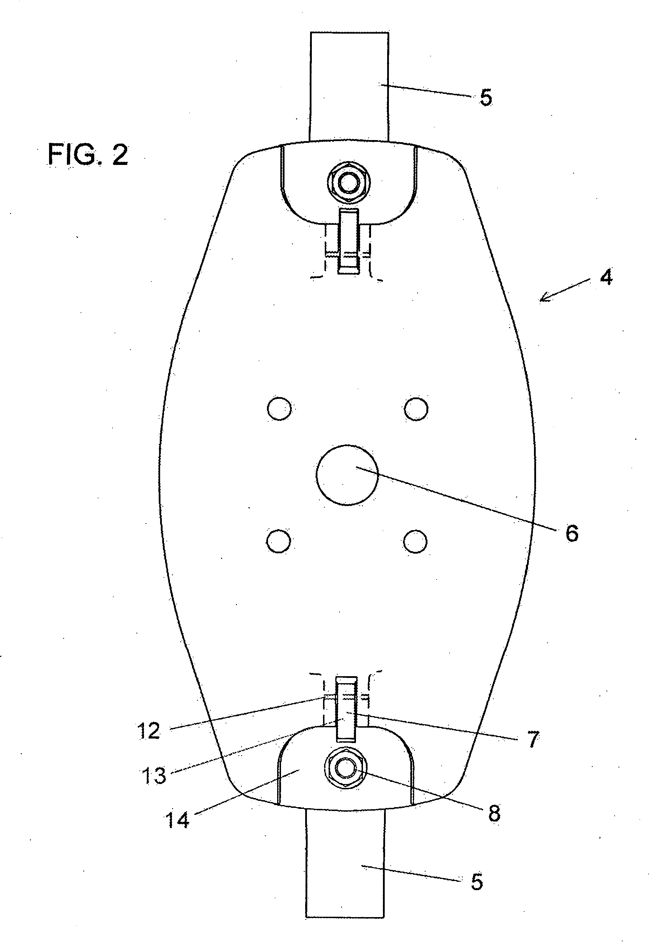

La figure 2 illustre en vue de dessous un rotor 4 équipé d'un système de blocage des couteaux 5 selon l'invention.

Le rotor de coupe 4, porteur du dispositif selon l'invention, a la forme d'un disque de forme globalement ovale avec deux couteaux 5 fixés sur les deux extrémités du grand axe de l'ovale.

Chacun de ces rotors 4 est fixé sur un axe central 6 monté rotatif sur la barre de coupe. L'extrémité inférieure de chaque axe 6 est munie d'une manière connue en soi d'une roue dentée qui est logée dans ladite barre et qui engrène avec d'autres roues dentées en vue de l'entraînement en rotation du rotor 4 correspondant.

Le dispositif de fixation rapide et sécurisé de chaque couteau 5 comporte un axe 10 qui est fixé sur le rotor au moyen d'un écrou 8. Ledit axe 10 comporte une rainure pour l'accrochage du couteau 5 qui s'étend vers l'extérieur sous l'effet de la force centrifuge. Une lame ressort 9 située sous le rotor 4 retient le couteau 5 sur son axe 10 en étant engagée au moins partiellement sur l'extrémité inférieure dudit axe 10. Cette lame 9 est liée au rotor 4 par des moyens de liaison tels que des vis. En sus, conformément à l'invention, chaque dispositif de fixation comporte un verrou 7 pour maintenir le couteau 5 lié au rotor 4. Ce verrou 7 a un rôle de blocage de la lame ressort 9 indépendamment de ses moyens de liaison au rotor 4 en vue d'empêcher le dégagement du couteau 5 de son axe 10.

Différents modes de réalisation de l'invention sont envisageables selon le type de verrou considéré.

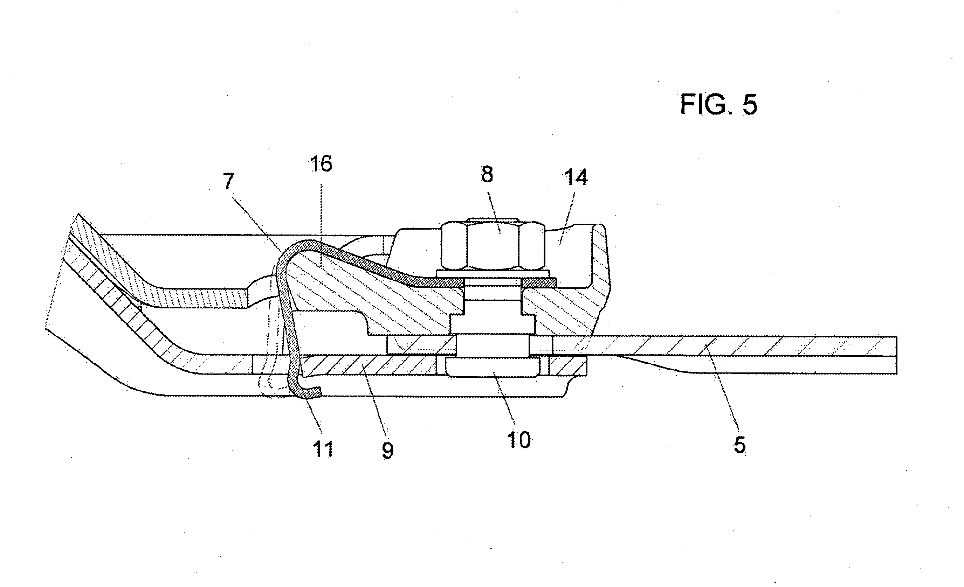

Un premier exemple de réalisation représenté sur les figures 2 à 4 concerne un verrou 7 de type basculant alors que la figure 5 illustre une deuxième réalisation envisageable avec un ressort conformé pour former le verrou 7.

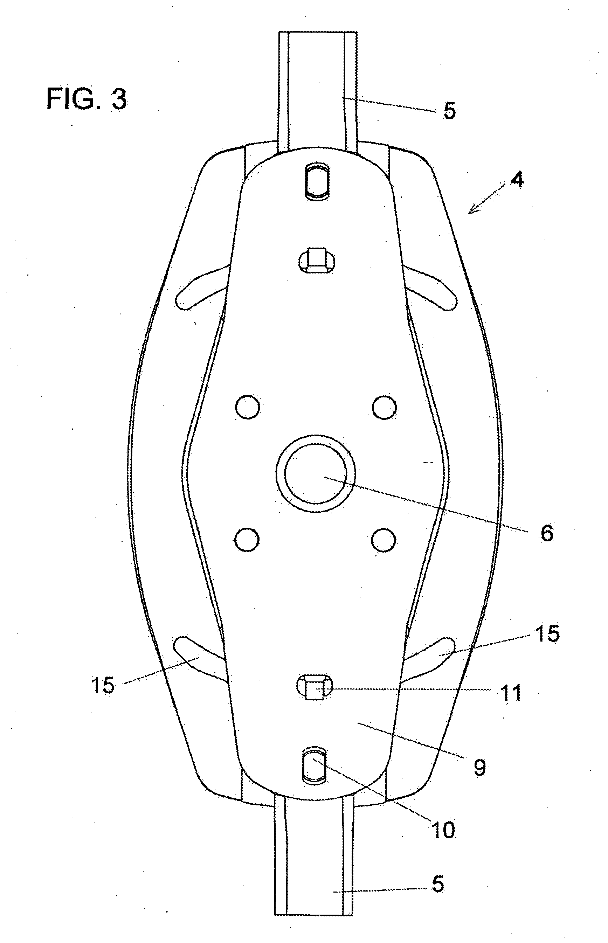

Selon le premier exemple de réalisation de l'invention les figures 2 et 3 représentent en vue de dessus et en vue de dessous un rotor 4 porteur de deux couteaux 5.

La position dessus du rotor 4 illustrée sur la figure 2 est celle dans laquelle la face du disque est orientée vers le ciel et la position dessous est celle orientée vers la terre et au champ, lors de la coupe et du fonctionnement du rotor 4, c'est-à-dire selon la représentation de la figure 1.

Selon l'invention, le verrou 7 est placé à proximité ou relié à l'axe d'accrochage 10 du couteau 5 sur le rotor 4. Il se situe ainsi plus près de l'axe d'accrochage 10 que de l'axe central 6 du rotor 4.

La lame ressort 9 est maintenue en position sur le rotor 4 au moyen du verrou 7 et plus particulièrement par sa partie inférieure en forme de crochet 11. Ledit verrou 7 est articulé sur le rotor 4 au moyen d'un axe 12 sensiblement horizontal.

Selon l'invention, la partie formant crochet 11 est au moins partiellement mobile. Selon cette première variante, la partie formant crochet 11 est mobile sous l'action de la rotation du verrou 7 dans son ensemble autour de l'axe 12.

Le verrou 7 comporte une extrémité supérieure, c'est-à-dire à l'opposé de la partie formant crochet 11, sur la face supérieure du disque, en forme de basculeur 13. Ce basculeur 13 est destiné à permettre le déverrouillage de la lame 9 sous l'action d'une pression manuelle ou de celle d'un outil vers le bas.

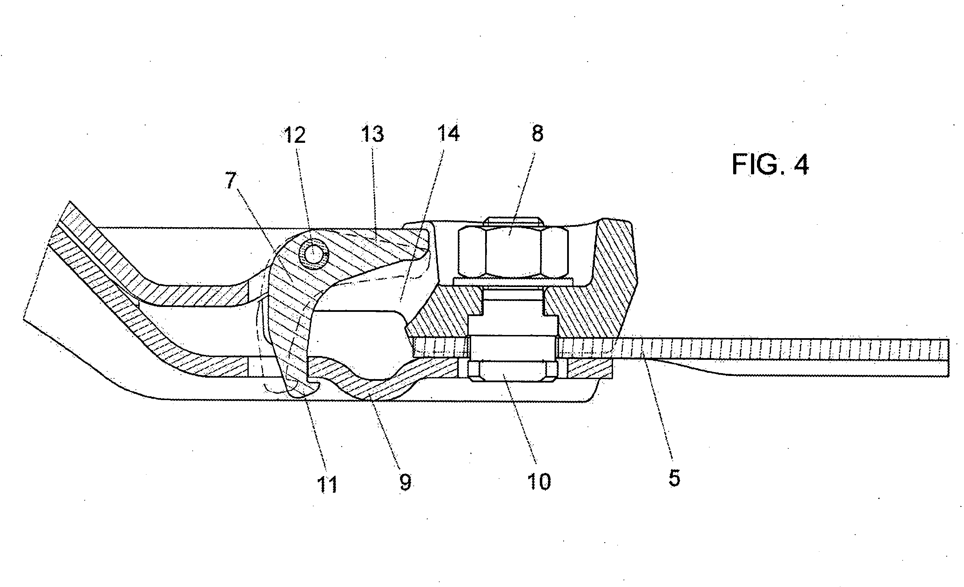

Une telle pression sur le basculeur 13 a pour effet de faire pivoter le verrou 7 dans son ensemble autour de l'axe 12. Ce pivotement entraîne le déplacement de la partie formant crochet 11 vers l'arrière, soit donc vers le centre du rotor 4, ce qui a pour effet de libérer la lame ressort 9 et d'autoriser le retrait du couteau 5 pour son remplacement. La position du verrou 7 après déplacement est représentée sur la figure 4 en traits interrompus.

Avantageusement selon l'invention le basculeur 13 est placé dans une cuvette 14 de manière à ce qu'en position de verrouillage ledit basculeur 13 ne dépasse pas du plan du rotor 4 et ne puisse pas être actionné involontairement.

De préférence le centre de gravité du verrou 7 est situé sous l'axe 12 qui permet le basculement de la pièce de verrouillage dans son ensemble de manière à garantir, lors du fonctionnement du rotor de fauchage 4, le blocage de la lame ressort 9, et donc du couteau 5, sous l'effet de la force centrifuge. Dans ce cas, la force centrifuge a pour effet de tirer la partie inférieure du verrou 7, et plus particulièrement la partie formant crochet 11, vers l'extérieur, c'est-à-dire dans la position de maintien de la lame ressort 9.

Lorsque le rotor 4 est entraîné en rotation, les couteaux 5 disposent d'une petite latitude de déplacement autour de l'axe 10 de manière à absorber les chocs subis. Cette rotation du couteau 5 est limitée par des butées 15 prévues sur la face inférieure du rotor 4. Ces butées 15 sont visibles sur la figure 3.

Tel que décrit, le dispositif de fixation rapide et sécurisé permet de supprimer le risque de perte d'un couteau 5 à l'occasion d'un choc violent, lors du fonctionnement de la faucheuse.

Selon un deuxième exemple de réalisation illustré sur la figure 5 la partie formant crochet 11 est uniquement mobile dans la partie de maintien de la lame ressort 9.

Dans cet exemple, le verrou 7 est relié et fixé sur l'axe 10 à l'aide du boulon 8. Pour déplacer la partie formant crochet 11 et libérer la lame ressort 9 un outil adapté, agissant en levier, est préférable.

Le déplacement du verrou 7 permettant la libération de la lame ressort 9 est représenté en traits interrompus sur la figure 5. Il est alors possible de repousser la lame 9 vers le bas en vue de dégager l'espace nécessaire pour retirer un couteau 5 usé et le remplacer par un couteau 5 neuf.

Avantageusement dans ce deuxième exemple de réalisation le verrou 7 est un ressort déformable conformé pour se situer dans une cuvette 14, comme dans l'exemple précédent et pour des raisons identiques de protection de la pièce et de sécurité de verrouillage.

Selon cette variante de réalisation la cuvette 14 peut disposer d'une géométrie permettant l'appui du verrou 7, par exemple au moyen d'une élévation 16 formée dans la partie de la cuvette 14 localisée plus vers l'intérieur du rotor 4.

De manière générale, selon l'invention, le verrou 7 est avantageusement positionné à proximité de l'axe 10 ou est relié à celui-ci, tel que cela est décrit dans ce deuxième exemple de réalisation, de manière à maintenir de manière optimale la lame ressort 9.

D'autres variantes de verrous 7 sont possibles de manière à maintenir la lame ressort 9 dans sa position, par exemple sous la forme de pièces clipables ou emboîtables, et ainsi bloquer le couteau 5 sur le rotor 4 de la faucheuse sans sortir du cadre de l'invention.

Différents matériaux peuvent être employés pour réaliser le verrou 7, lequel verrou 7 peut être conformé de différentes manières, avec une partie formant crochet 11 plus ou moins longue et plus ou moins large sous la lame ressort 9, sans sortir du cadre de l'invention.

Bien entendu, l'invention n'est pas limitée aux modes de réalisation décrits et représentés à titre d'exemples.

## Revendications

1. Dispositif de fixation d'un couteau (5) porté par un rotor (4) d'une machine de fauchage, lequel couteau (5) est maintenu en place sur ledit rotor (4) au moyen d'un axe d'accrochage (10) et d'une lame ressort (9) qui est liée au rotor par des moyens de liaison, le dispositif de fixation étant ***caractérisé par le fait* qu**'il comporte au moins un verrou (7) immobilisant ladite lame, ressort (9) indépendamment de ses moyens de liaison au rotor (4), lequel verrou (7) est placé à proximité de ou relié à l'axe (10) de l'accrochage du couteau (5) sur le rotor (4).

2. Dispositif de fixation d'un couteau (5) selon la revendication 1, ***caractérisé par le fait* que** le verrou (7) comporte une partie formant crochet (11) pour maintenir la lame ressort (9) en place.

3. Dispositif de fixation d'un couteau (5) selon la revendication 2, ***caractérisé par le fait que*** la partie formant crochet (11) est au moins partiellement mobile.

4. Dispositif de fixation d'un couteau (5) selon la revendication 3, ***caractérisé par le fait que*** la partie formant crochet (11) est mobile sous l'action de la rotation du verrou (7) dans son ensemble.

5. Dispositif de fixation d'un couteau (5) selon la revendication 4, ***caractérisé par le fait que*** le verrou (7) est articulé autour d'un axe (12) et comporte une extrémité en forme de basculeur (13) destinée à faciliter le déverrouillage de la lame ressort (9).

6. Dispositif de fixation d'un couteau (5) selon la revendication 5, ***caractérisé par le fait que*** le basculeur (13) du verrou (7) est placé dans une cuvette (14) de manière à ce qu'en position de verrouillage ledit basculeur (13) ne dépasse pas du plan du rotor (4).

7. Dispositif de fixation d'un couteau (5) selon la revendication 5, ***caractérisé par le fait que*** le centre de gravité du verrou (7) est situé sous l'axe (12) de manière à maintenir le verrou (7) bloqué sous l'effet de la force centrifuge, lors de la rotation du rotor (4).

8. Dispositif de fixation d'un couteau (5) selon la revendication 3, ***caractérisé par le fait que*** la partie formant crochet (11) est mobile uniquement dans la partie de maintien de la lame ressort (9).

9. Dispositif de fixation d'un couteau (5) selon la revendication 8, ***caractérisé par le fait que*** le verrou (7) est fixé par l'extrémité opposée à la partie formant crochet (11) sur l'axe d'accrochage (10) du couteau (5) sur le rotor (4).

10. Dispositif de fixation d'un couteau (5) selon la revendication 9, ***caractérisé par le fait que*** le verrou (7) est un ressort conformé avec une partie formant crochet (11).

11. Rotor de coupe d'une machine de fauchage, lequel rotor (4) porte au moins un couteau (5) maintenu en place au moyen d'un axe d'accrochage (10) et d'une lame ressort (9), ***caractérisé par le fait qu'***il comporte au moins un dispositif de fixation selon l'une quelconque des revendications précédentes.

12. Machine de fauchage comportant au moins un rotor (4) portant au moins un couteau (5) maintenu en place au moyen d'un axe d'accrochage (10) et d'une lame ressort (9), ***caractérisé par le fait* que** ledit rotor (4) comporte au moins un dispositif de fixation selon l'une quelconque des revendications 1 à 10.

## Claims

1. Device for fastening a knife (5) carried by a rotor (4) of a mowing machine, which knife (5) is held in place on the said rotor (4) by means of a hitching shaft (10) and a leaf spring (9) that is connected to the rotor by connection means, the fastening device ***being characterized in* that** it comprises at least one lock (7) immobilizing the said leaf spring (9) independently from its means of connection to the rotor (4), which lock (7) is placed near or connected to the hitching shaft (10) of the knife (5) on the rotor (4).

2. Knife (5) fastening device according to claim 1, ***characterized in* that** the lock (7) comprises a hook-shaped part (11) to hold the leaf spring (9) in place.

3. Knife (5) fastening device according to claim 2, ***characterized in* that** the hook-shaped part (11) is at least partially mobile.

4. Knife (5) fastening device according to claim 3, ***characterized in* that** the hook-shaped part (11) is mobile under the action of the rotation of the lock (7) in its assembly.

5. Knife (5) fastening device according to claim 4, ***characterized in* that** the lock (7) is articulated around a shaft (12) and comprises a tip-shaped end (13) intended to make the unlocking of the leaf spring (9) easier.

6. Knife (5) fastening device according to claim 5, ***characterized in* that** the tip (13) of the lock (7) is placed in an enclosure (14) such that in the locking position the said tip (13) does not project beyond the plane of the rotor (4).

7. Knife (5) fastening device according to claim 5, ***characterized in* that** the center of gravity of the lock (7) is situated under the shaft (12) so as to hold the lock (7) locked under the effect of the centrifugal force when the rotor (4) is rotated.

8. Knife (5) fastening device according to claim 3, ***characterized in* that** the hook-shaped part (11) is mobile only in the leaf spring (9) holding part.

9. Knife (5) fastening device according to claim 8, ***characterized in* that** the lock (7) is fixed by the end opposite to the hook-shaped part (11) on the hitching shaft (10) of the knife (5) on the rotor (4).

10. Knife (5) fastening device according to claim 9, ***characterized in* that** the lock (7) is a spring shaped with a hook-shaped part (11).

11. Cutting rotor of a mowing machine, which rotor (4) carries at least one knife (5) held in place by means of a hitching shaft (10) and a leaf spring *(9),* ***characterized in* that** the rotor comprises at least one fastening device according to any one of the previous claims.

12. Mowing machine comprising at least one rotor (4) carrying at least one knife (5) held in place by means of a hitching shaft (10) and a leaf spring (9), ***characterized in* that** the said rotor (4) comprises at least one fastening device according to any one of claims 1 to 10.

## Patentansprüche

1. Vorrichtung zur Befestigung eines von einem Rotor (4) einer Mähmaschine getragenen Messers (5), wobei das Messer (5) auf dem Rotor (4) mittels einer Kupplungsachse (10) und eines Federblättchens (9), das mit dem Rotor durch Verbindungsmittel verbunden ist, gehalten wird, wobei die Befestigungsvorrichtung ***dadurch gekennzeichnet ist,* dass** sie mindestens einen Riegel (7) umfasst, der das Federblättchen (9) unabhängig von seinen Verbindungsmitteln mit dem Rotor (4) feststellt, wobei der Riegel (7) in der Nähe der Kupplungsachse (10) des Messers (5) auf dem Rotor (4) angeordnet oder mit dieser verbunden ist.

2. Befestigungsvorrichtung für ein Messer (5) nach Anspruch 1, ***dadurch gekennzeichnet,* dass** der Riegel (7) einen einen Haken (11) bildenden Teil umfasst, um das Federblättchen (9) in Position zu halten.

3. Befestigungsvorrichtung für ein Messer (5) nach Anspruch 2, ***dadurch gekennzeichnet,* dass** der den Haken (11) bildende Teil zumindest teilweise beweglich ist.

4. Befestigungsvorrichtung für ein Messer (5) nach Anspruch 3, ***dadurch gekennzeichnet,* dass** der den Haken (11) bildende Teil unter der Wirkung der Drehung des Riegels (7) in seiner Gesamtheit beweglich ist.

5. Befestigungsvorrichtung für ein Messer (5) nach Anspruch 4, ***dadurch gekennzeichnet,* dass** der Riegel (7) um eine Achse (12) angelenkt ist und ein Ende in Form eines Kippelements (13) umfasst, das dazu bestimmt ist, die Entriegelung des Federblättchens (9) zu erleichtern.

6. Befestigungsvorrichtung für ein Messer (5) nach Anspruch 5, ***dadurch gekennzeichnet,* dass** das Kippelement (13) des Riegels (7) in einem Rücksprung (14) angeordnet ist, damit in Verriegelungsposition das Kippelement (13) nicht über die Ebene des Rotors (4) hinausragt.

7. Befestigungsvorrichtung für ein Messer (5) nach Anspruch 5, ***dadurch gekennzeichnet,* dass** der Schwerpunkt des Riegels (7) unter der Achse (12) liegt, um den Riegel (7) unter der Wirkung der Fliehkraft bei der Drehung des Rotors (4) festgestellt zu halten.

8. Befestigungsvorrichtung für ein Messer (5) nach Anspruch 3, ***dadurch gekennzeichnet,* dass** der den Haken (11) bildende Teil nur in dem Halteteil des Federblättchens (9) beweglich ist.

9. Befestigungsvorrichtung für ein Messer (5) nach Anspruch 8, ***dadurch gekennzeichnet,* dass** der Riegel (7) mit dem dem den Haken (11) bildenden Teil gegenüber liegenden Ende auf der Kupplungsachse (10) des Messers (5) auf dem Rotor (4) befestigt ist.

10. Befestigungsvorrichtung für ein Messer (5) nach Anspruch 9, ***dadurch gekennzeichnet,* dass** der Riegel (7) eine Feder ist, die mit einem einen Haken (11) bildenden Teil ausgebildet ist.

11. Schneidrotor einer Mähmaschine, wobei der Rotor (4) mindestens ein Messer (5) trägt, das mittels einer Kupplungsachse (10) und eines Federblättchens (9) gehalten wird, ***dadurch gekennzeichnet,* dass** er mindestens eine Befestigungsvorrichtung nach irgend einem der vorhergehenden Ansprüche umfasst.

12. Mähmaschine mit mindestens einem Rotor (4), der mindestens ein Messer (5) trägt, das mittels einer Kupplungsachse (10) und eines Federblättchens (9) in Position gehalten wird, ***dadurch gekennzeichnet,* dass** der Rotor (4) mindestens eine Befestigungsvorrichtung nach irgend einem der Ansprüche 1 bis 10 umfasst.
